# EUROPEAN PATENT SPECIFICATION

(11) **EP 3 236 061 B1**
(45) Date of publication and mention of the grant of the patent: **04.08.2021**
(21) Application number: 15869690.6
(22) Date of filing: 06.11.2015
(51) Int. Cl.: F02M 59/46, F16K 15/04, F04B 53/10, F04B 1/04, F04B 1/053, F04B 7/00, F04B 11/00, F04B 23/02, F04B 23/04, F02M 63/00

(54) **VALVE MECHANISM AND HIGH-PRESSURE FUEL-SUPPLY PUMP HAVING SAME**
VENTILMECHANISMUS UND HOCHDRUCK-KRAFTSTOFFFÖRDERPUMPE DAMIT
MÉCANISME DE SOUPAPE ET POMPE D'ALIMENTATION EN CARBURANT À HAUTE PRESSION COMPORTANT CELUI-CI

(30) Priority: 18.12.2014 JP 2014255710
(43) Date of publication of application: 25.10.2017
(73) Proprietor: Hitachi Automotive Systems, Ltd., Hitachinaka-shi, Ibaraki 312-8503 (JP)
(72) Inventor: OMATA Shigehiko, Hitachinaka-shi Ibaraki 312-8503 (JP); AKIYAMA Moritsugu, Hitachinaka-shi Ibaraki 312-8503 (JP); NEMOTO Masashi, Hitachinaka-shi Ibaraki 312-8503 (JP); MACHIMURA Hideki, Hitachinaka-shi Ibaraki 312-8503 (JP); TAHARA Shigenori, Hitachinaka-shi Ibaraki 312-8503 (JP); OGINUMA Takanori, Hitachinaka-shi Ibaraki 312-8503 (JP)
(74) Representative: MERH-IP Matias Erny Reichl Hoffmann Patentanwälte PartG mbB
(86) International application number: PCT/JP2015/081245
(87) International publication number: WO 2016/098482

(56) References cited:
- EP-A2- 0 976 925
- DE-A1-102012 017 953
- JP-A- 2000 045 906
- JP-A- 2010 116 979
- JP-A- 2011 012 732
- JP-A- 2011 064 237
- JP-Y2- H0 117 485
- US-B1- 6 497 247

## Description

### Technical Field

The present invention relates to a valve mechanism and a high-pressure fuel supply pump including the same.

### Background Art

As a conventional technique of the present invention, PTL 1 (JP 2010-014012 A) discloses a high-pressure fuel supply pump. FIG. 7 of PTL 1 discloses a valve element 88 for closing an opening on the other end side of a valve seat 75 when the valve element 88 is seated on the valve seat 75, and a spring 90 as a biasing means for biasing the valve element 88 in a direction in which the valve element 88 is seated on the valve seat 75.

### Citation List

### Patent Literature

PTL 1: JP 2010-014012 A

In EP 0 976 925 A2 a high-pressure fuel pump assembly for a cylinder-injected engine is described. A check valve is suggested which is a ball valve. A housing is suggested that has a male thread on its outer circumferential surface which engages with the female thread disposed in the casing and the housing is secured to the casing.

US6497247 B1 discloses a a high-pressure fuel supply pump including a valve mechanism provided on a discharge side.

### Summary of Invention

### Technical Problem

A structure of FIG. 7 of PTL 1 does not include a restriction member for restricting displacement of the valve element 88 in a direction of crossing a stroke axis of the valve element 88. Therefore, the valve element 88 can be violently displaced in the crossing direction. Thus, the position where the valve element contacts the valve seat during valve closure can be inconstant.

Thus, it is an object of the present invention to provide a valve mechanism that suppresses violent displacement of a valve in a direction of crossing a stroke axis when the valve is opened and closed, and a high-pressure fuel supply pump including the same.

### Solution to Problem

To solve the problems, the features of the independent claim are suggested. Preferred developments are in the dependent claims.

### Advantageous Effects of Invention

According to the present invention, the displacement of the valve in the crossing direction crossing the opening and closing direction of the valve can be suppressed.

Other configurations, operations, and effects of the present invention are described in detail in examples below.

### Brief Description of Drawings

[FIG. 1] FIG. 1 is an example of a fuel supply system using a high-pressure fuel supply pump according to a first example of the present invention.
[FIG. 2] FIG. 2 is a longitudinal sectional view of the high-pressure fuel supply pump according to the first example of the present invention.
[FIG. 3] FIG. 3 is a longitudinal sectional view of the high-pressure fuel supply pump according to the first example of the present invention, indicating a longitudinal section at an angle different from that of FIG. 2.
[FIG. 4] FIG. 4 is an enlarged view of an electromagnetic driven valve mechanism 30 of the high-pressure fuel supply pump according to the first example of the present invention, illustrating a state where an electromagnetic coil 52 is not energized.
[FIG. 5] FIG. 5 is an enlarged view of the electromagnetic driven valve mechanism 30 of the high-pressure fuel supply pump according to the first example of the present invention, illustrating a state where the electromagnetic coil 52 is energized.
[FIG. 6] FIG. 6 illustrates a state before the electromagnetic driven valve mechanism 30 of the high-pressure fuel supply pump according to the first example of the present invention is incorporated into a pump housing 1.
[FIG. 7] FIG. 7 illustrates an enlarged view of a discharge valve mechanism portion of the high-pressure fuel supply pump according to the first example of the present invention in a valve closed state.
[FIG. 8] FIG. 8 illustrates an enlarged view of the discharge valve mechanism portion of the high-pressure fuel supply pump according to the first example of the present invention in a valve opened state.
[FIG. 9] FIG. 9 illustrates a state before a plunger unit 80 of the high-pressure fuel supply pump according to the first example of the present invention is incorporated into a pump housing.
[FIG. 10] FIG. 10 illustrates a method of assembling the plunger unit 80 of the high-pressure fuel supply pump according to the first example of the present invention.
[FIG. 11] FIG. 11 is an external view of the high-pressure fuel supply pump according to the first example of the present invention.
[FIG. 12] FIG. 12 is a partially enlarged view of the high-pressure fuel supply pump according to the first example of the present invention.
[FIG. 13] FIG. 13 is an exploded perspective view of a discharge valve unit.
[FIG. 14] FIG. 14 illustrates an enlarged view of a discharge valve mechanism portion of a high-pressure fuel supply pump according to a third example of the present invention in a valve closed state.

### Description of Embodiments

Examples of the present invention are described below on the basis of the drawings.

### Example 1

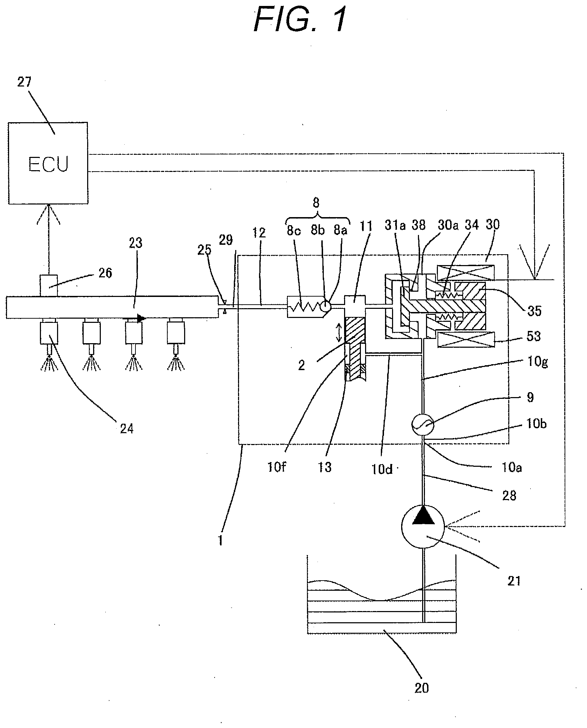

Examples of the valve mechanism and the high-pressure fuel supply pump including the same of the present invention are described in conjunction with FIGS. 1 to 12.

In FIG. 1, a portion surrounded by the dashed line indicates a pump housing 1 of a high-pressure pump. It is indicated that mechanisms and parts illustrated within the dashed line are integrally incorporated into the pump housing 1 of the high-pressure pump.

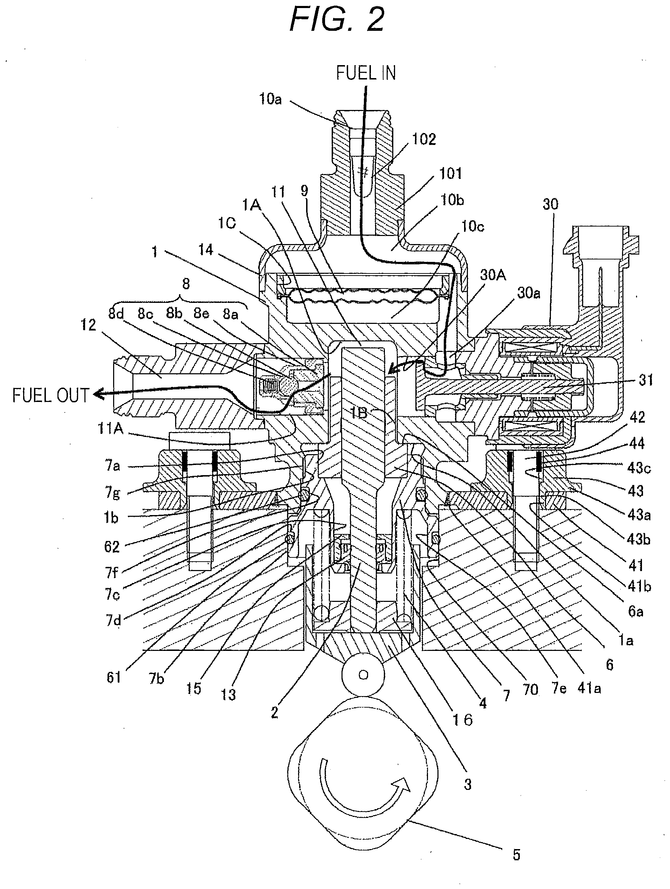

In addition, FIG. 2 illustrates a longitudinal sectional view of the high-pressure fuel supply pump of the present example.

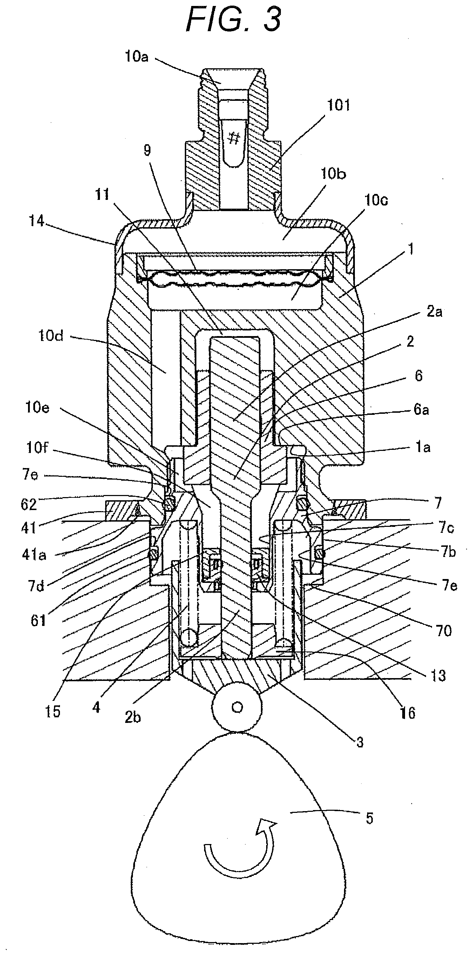

In addition, FIG. 3 is a longitudinal sectional view of the high-pressure fuel supply pump of the present example, indicating a longitudinal section at an angle different from that of FIG. 2.

A fuel of a fuel tank 20 is pumped up by a feed pump 21 on the basis of a signal from an engine control unit 27 (hereinafter an ECU). The fuel is pressurized to an appropriate feed pressure and is delivered to a suction inlet 10a of the high-pressure fuel supply pump via a suction pipe 28. In the present example, the feed pressure is about 0.4 MPa.

The fuel passing through the suction inlet 10a passes through a filter 102, which is fixed in a suction joint 101. Furthermore, the fuel reaches a suction port 30a of an electromagnetic driven valve mechanism 30 constituting a capacity variable mechanism via a suction flow channel 10b, a metal diaphragm damper 9, and a damper chamber 10c.

The suction filter 102 in the suction joint 101 serves to prevent foreign substances present between the fuel tank 20 and the suction inlet 10a from being absorbed into the high-pressure fuel supply pump by the flow of the fuel.

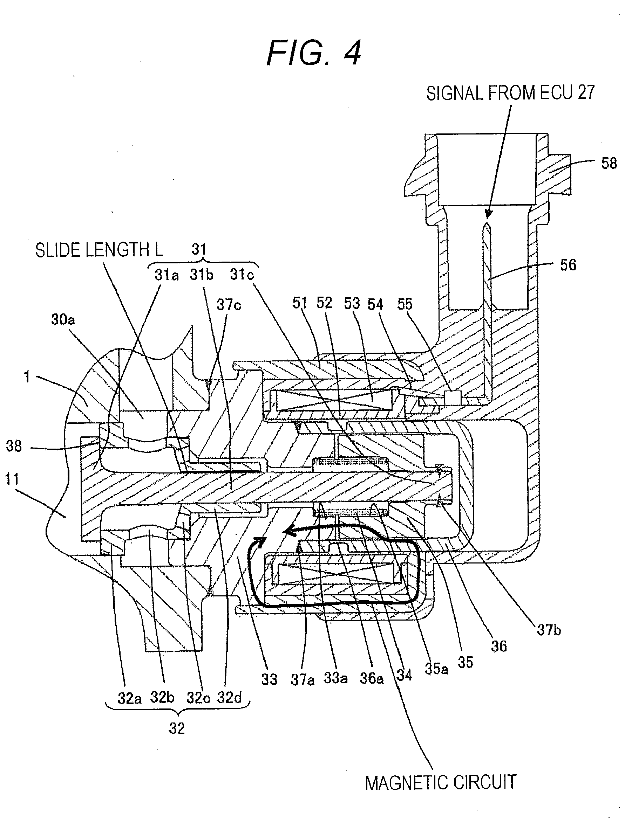

FIG. 4 is an enlarged view of the electromagnetic driven valve mechanism 30, indicating a non-energized state where an electromagnetic coil 53 is not energized.

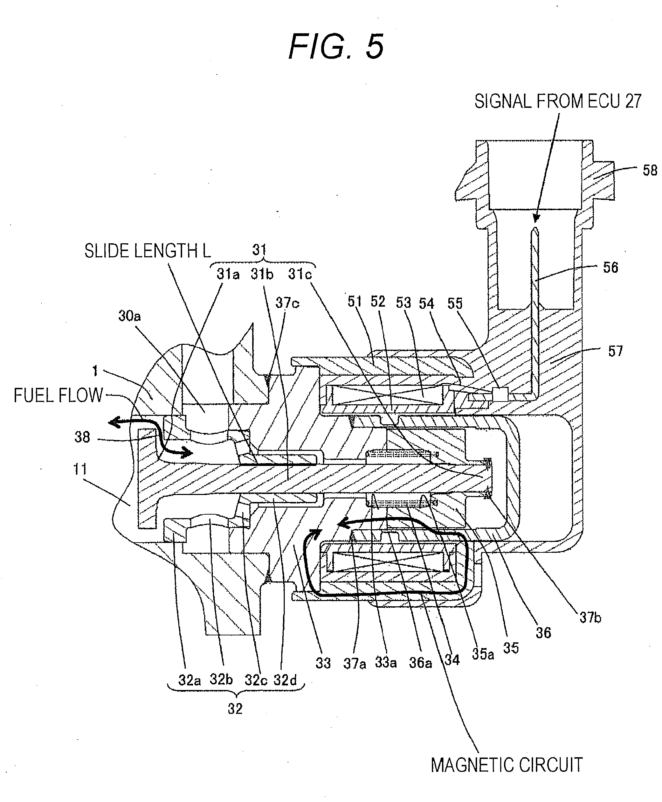

FIG. 5 is an enlarged view of the electromagnetic driven valve mechanism 30, indicating an energized state where the electromagnetic coil 53 is energized.

At the center of the pump housing 1, a protrusion portion 1A protruding upward is formed as a pressurizing chamber 11. In addition, a hole 30A for mounting the electromagnetic driven valve mechanism 30 is formed on the pump housing 1 so as to be opened to the pressurizing chamber 11.

A plunger rod 31 is formed of three portions: a suction valve portion 31a, a rod portion 31b, and an anchor fixation portion 31c. An anchor 35 is fixed in a welded manner to the anchor fixation portion 31c by a weld portion 37b.

As illustrated, a spring 34 is fitted to an anchor inner circumference 35a and a first core portion inner circumference 33a such that a spring force is generated by the spring 34 in a direction in which the anchor 35 is pulled away from a first core portion 33.

A valve seat member 32 is formed of a suction valve seat portion 32a, a suction passage portion 32b, a press-fit portion 32c, and a slide portion 32d. The press-fit portion 32c is fixed in a press-fit manner to the first core portion 33. The suction valve seat portion 32a is fixed in a press-fit manner to the pump housing 1. The press-fit portion fully disconnects the pressurizing chamber 11 from the suction port 30a.

The first core portion 33 is fixed in a welded manner to the pump housing 1 by a weld portion 37c and disconnects the suction port 30a from the outside of the high-pressure fuel supply pump.

A second core portion 36 is fixed to the first core portion 33 by a weld portion 37a, and the internal space of the second core portion 36 is fully disconnected from the external space. In addition, the second core portion 36 includes a magnetic orifice portion 36a.

In a non-energized state where the electromagnetic coil 53 is not energized and when there is no fluid pressure difference between a suction flow channel 10g (suction port 30a) and the pressurizing chamber 11, the plunger rod 31 is brought into a state of being moved rightward in the drawing by the spring 34 as illustrated in FIG. 4. In this state, the valve is brought into a closed state where the suction valve portion 31a is in contact with the suction valve seat portion 32a, and a suction inlet 38 is closed.

In a suction process state where a plunger 2 is displaced downward in FIG. 2 by the rotation of a cam to be described below, the volume of the pressurizing chamber 11 is increased and the fuel pressure in the pressurizing chamber 11 is reduced. When the fuel pressure in the pressurizing chamber 11 becomes smaller than the pressure of the suction flow channel 10g (suction port 30a) in the process, a valve opening force (a force for displacing the suction valve portion 31a leftward in FIG. 1) is generated to the suction valve portion 31a by the fluid pressure difference of the fuel.

The suction valve portion 31a is set to overcome the biasing force of the spring 34 by means of the valve opening force resulting from the fluid pressure difference and open the valve so that the suction inlet 38 is opened. When there is a large fluid pressure difference, the suction valve portion 31a is fully opened and the anchor 35 is brought into a state of being in contact with the first core portion 33. When there is a small fluid pressure difference, the suction valve portion 31a is not fully opened and the anchor 35 does not contact the first core portion 33.

In this state, when a control signal from the ECU 27 is applied to the electromagnetic driven valve mechanism 30, a current flows through the electromagnetic coil 53 of the electromagnetic driven valve mechanism 30, and a magnetic biasing force is generated between the first core portion 33 and the anchor 35 whereby the first core portion 33 and the anchor 35 attract one another. As a result, the magnetic biasing force is applied to the plunger rod 31 leftward in the drawing.

When the suction valve portion 31a is fully opened, the valve opened state is held. When the suction valve portion 31a is not fully opened, the valve opening movement of the suction valve portion 31a is promoted and the suction valve portion 31a is fully opened. Thus, the anchor 35 is brought into a state of being in contact with the first core portion 33 and then the state is maintained.

As a result, the state where the suction valve portion 31a opens the suction inlet 38 is maintained, and the fuel passes through the suction port 30a, the suction passage portion 32b of the valve seat member 32, and the suction inlet 38, and flows into the pressurizing chamber 11.

When the plunger 2 completes the suction process while the state where an input voltage is applied to the electromagnetic driven valve mechanism 30 is maintained and the plunger 2 shifts to a compression process where the plunger 2 is displaced upward in FIG. 2, because the magnetic biasing force is maintained, the suction valve portion 31a remains opened.

The volume of the pressurizing chamber 11 is reduced by the compression movement of the plunger 2. However, in this state, the fuel once sucked to the pressurizing chamber 11 is returned back to the suction flow channel 10g (suction port 30a) through the suction inlet 38 in a valve opened state. Therefore, the pressure of the pressurizing chamber is not increased. This process is called a return process.

In this state, when the control signal from the ECU 27 is canceled and the energization of the electromagnetic coil 53 is stopped, the magnetic biasing force acting on the plunger rod 31 is removed after a given time (after magnetic, mechanical delay time) . Because the biasing force of the spring 34 is acted on the suction valve portion 31a, when the electromagnetic force exerting on the plunger rod 31 is lost, the suction valve portion 31a closes the suction inlet 38 by means of the biasing force of the spring 34. When the suction inlet 38 is closed, from this point, the fuel pressure of the pressurizing chamber 11 is increased along with the upward movement of the plunger 2.

When the fuel pressure becomes equal to or greater than the pressure of a fuel discharge port 12, the fuel remaining in the pressurizing chamber 11 is discharged at high pressure via the discharge valve unit (discharge valve mechanism) 8 and is supplied to a common rail 23. This process is called a discharge process. In other words, the compression process (an upward movement process from a bottom starting point to a top starting point) of the plunger 2 consists of the return process and the discharge process. Controlling the timing of canceling the energization of the electromagnetic coil 53 of the electromagnetic driven valve mechanism 30 enables controlling of the amount of high-pressure fuel to be discharged.

When the energization of the electromagnetic coil 53 is canceled at an early timing, the proportion of the return process is small and the proportion of the discharge process is large in the compression process.

In other words, little fuel is returned to the suction flow channel 10g (suction port 30a), and much fuel is discharged at high pressure.

Meanwhile, when the timing of canceling an input voltage is late, the proportion of the return process is large and the proportion of the discharge process is small in the compression process. In other words, much fuel is returned to the suction flow channel 10g and little fuel is discharged at high pressure. The timing of canceling energization of the electromagnetic coil 53 is controlled by a command from the ECU.

With the aforementioned configuration, when the timing of canceling the energization of the electromagnetic coil 53 is controlled, the amount of fuel to be discharged at high pressure can be controlled to an amount required by the internal combustion engine.

Thus, the required amount of the fuel introduced to the fuel suction inlet 10a is pressurized to a high pressure by the reciprocating movement of the plunger 2 in the pressurizing chamber 11 of the pump housing 1, which is the pump main body, and is pumped to the common rail 23 through the fuel discharge port 12.

The common rail 23 includes injectors 24 and a pressure sensor 26. The injectors 24 are mounted according to the number of cylinders of the internal combustion engine and are opened and closed according to a control signal of the engine control unit (ECU) 27 to inject the fuel into the cylinders.

In this case, the suction valve portion 31a repeats the movement of opening and closing the suction inlet 38 following the upward and downward movement of the plunger 2, and the plunger rod 31 repeats movement in a right and left direction in the drawing. In this case, regarding the movement of the plunger rod 31, the motion is limited only to the movement in the right and left direction in the drawing by the slide portion 32d of the valve seat member 32, and the slide portion 32d and the rod portion 31b repeat slide movement. Therefore, the inner circumferential surface of the slide portion 32d requires sufficiently low surface roughness so as not to resist the slide movement of the plunger rod 31.

In the present example, as illustrated in FIG. 5, members constituting the magnetic circuit include the anchor 35, the first core portion 33, a yoke 51, and the second core portion 36, all of which are magnetic materials.

The first core portion 33 and the second core portion 36 are joined by welding by the weld portion 37a. However, a magnetic flux is required not to directly pass through between the first core portion 33 and the second core portion 36, but to pass through via the anchor 35 in order to generate the magnetic biasing force between the first core portion 33 and the anchor 35. If the magnetic flux directly passes through between the first core portion 33 and the second core portion 36 and the magnetic flux passing through the anchor is reduced, the magnetic biasing force is reduced.

Thus, in the present example, the first core portion 33 and the second core portion 36 are directly joined at the weld portion 37a, and the magnetic orifice portion 36a is provided on the second core portion. The magnetic orifice portion 36a has the thinnest possible thickness as far as the strength allows, and other parts of the second core portion 36 retain a sufficient thickness. In addition, the magnetic orifice portion 36a is provided in the vicinity of a portion where the first core portion contacts the anchor 35.

Thus, a large part of the magnetic flux generated passes through the anchor 35, and very little magnetic flux directly passes through the first core portion 33 and the second core portion 36, so that a resulting reduction in magnetic biasing force generated between the first core portion 33 and the anchor 35 is in the allowable range.

The magnetic coil 53 is formed as a lead wire 54 is wound about the axis of the plunger rod 31. Both ends of the lead wire 54 are connected in a welded manner to a terminal 56 by a lead wire weld portion 55. In addition, reference numeral 57 denotes a molded yoke. The terminal is a conductive matter and is opened to a connector portion 58. When an other-side connector of an ECU is connected to the connector portion 58, the terminal contacts an other-side terminal and transmits a current to the coil.

In the present example, the lead wire weld portion 55 is arranged outside of the yoke 51. As the lead wire weld portion 55 is arranged outside of the magnetic circuit, a space required for the lead wire weld portion 55 is removed and the entire length of the magnetic circuit can be reduced. Thus, a sufficient magnetic biasing force can be generated between the first core portion 33 and the anchor 35.

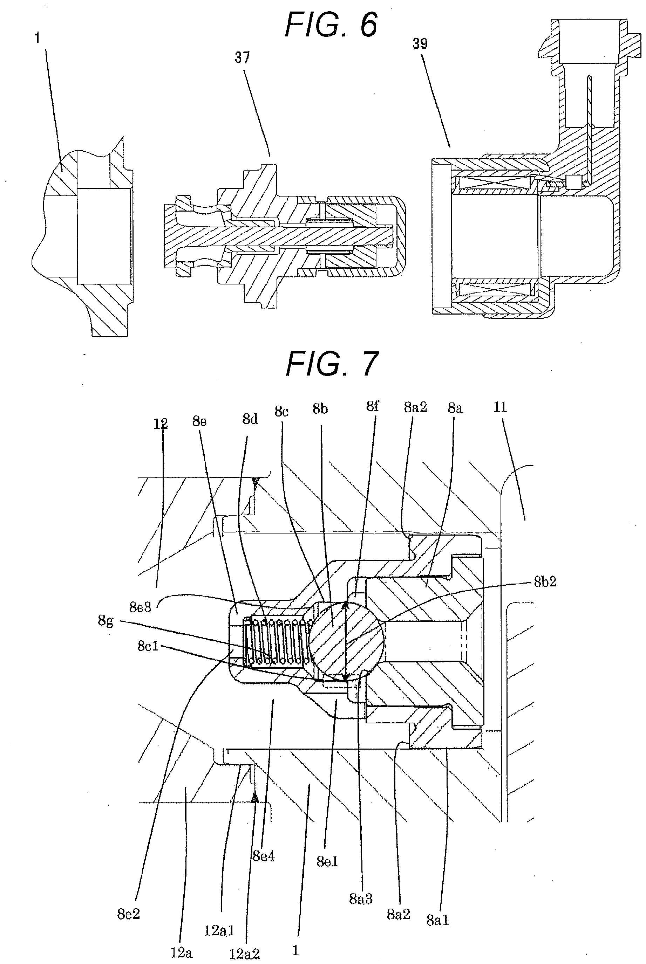

FIG. 6 illustrates a state before the electromagnetic driven valve mechanism 30 is incorporated into the pump housing 1.

In the present example, first, units are made as a suction valve unit 37 and a connector unit 39. Next, the suction valve seat portion 32a of the suction valve unit 37 is fixed in a press-fit manner to the pump housing 1, and then the weld portion 37c is joined in a welded manner across the entire circumference. In the present example, welding is laser welding. In this state, the connector unit 39 is fixed in a press-fit manner to the first core portion 33. Thus, the orientation of the connector 58 can be freely selected.

The center of the pump housing 1 includes the protrusion portion 1A, which is the pressurizing chamber 11. Furthermore, the pump housing 1 includes a recess 11A for mounting a discharge valve unit 8, which is the discharge valve mechanism, such that the recess 11A is opened to the pressurizing chamber 11.

FIG. 7 illustrates an enlarged view of the discharge valve mechanism portion in a valve closed state.

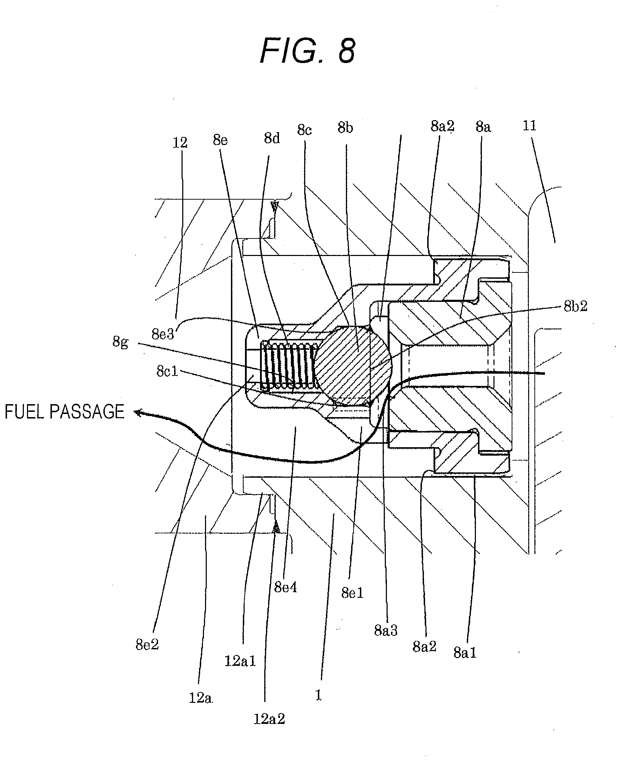

FIG. 8 illustrates an enlarged view of the discharge valve mechanism portion in a valve opened state.

The discharge valve unit 8, which is the valve mechanism of the present example, is provided at an outlet of the pressurizing chamber 11. The discharge valve unit 8 includes a valve seat member 8a having a discharge valve seat surface portion, a discharge valve member 8b having a spherical shape that enables linear contact, and a valve housing 8e for accommodating the valve seat member 8a and the discharge valve member 8b. In addition, a valve holding portion 8c of the valve housing 8e is formed in a shape that restricts the displacement of the valve member 8b in a direction in which the discharge valve member 8b crosses the stroke axis of the valve, i.e., in a crossing direction crossing the opening and closing direction of the discharge valve member 8b. The valve holding portion 8c slidably encloses the outer circumference of a maximum diameter position 8b2 of the discharge valve member 8b in a direction in which the valve member 8b crosses the stroke axis of the valve.

With this configuration, the discharge valve member 8b can be held by the valve housing 8e. Therefore, there is no need to separately provide a member for holding the discharge valve member 8b, enabling a reduction in number of parts and a reduction in cost. In addition, as compared to the case of holding with a separate member, the configuration of the discharge valve unit 8 of the present example enables stable holding of the discharge valve member 8b.

In addition, the discharge valve unit 8 includes a discharge valve spring (elastic body) 8d for biasing the valve member 8b in a closing direction. The discharge valve spring 8d is not an essential configuration. However, including this enables stabilization of the discharge valve member 8b. In addition, the valve housing 8e further accommodates a discharge valve spring (elastic body) 8d in addition to the valve seat member 8a and the discharge valve member 8b, and reduces the number of parts. In addition, the valve housing 8e is formed in a shape having a stopper function portion 8e3 that supports the discharge valve member 8b in a valve opening and closing direction.

The valve seat member 8a, the discharge valve member 8b, and the discharge valve spring 8d are arranged in this order in a fuel discharge direction. In the opening and closing direction of the discharge valve member 8b, the valve seat member 8a, the discharge valve member 8b, and the discharge valve spring 8d are arranged to overlap with the valve housing 8e.

As an assembling method, first, outside the pump housing 1, the discharge valve member 8b having a spherical shape and the discharge valve spring 8d are incorporated into the valve housing 8e, and the valve seat member 8a is press-fit to assemble the discharge valve,unit 8. Preliminary assembling of the discharge valve unit 8 in the manner described above enables production at low costs without a large-scale equipment for a pump assembling process. Then, the discharge valve unit 8 is press-fit to the pump housing 1 from the left side of FIGS. 7 and 8 and is fixed by a press-fit portion 8a1. For press-fitting, a stepped surface formed on the valve housing 8e serves as a load reception portion 8a2, and a mounting jig is placed on the load reception portion 8a2 and pressed to the right side in the drawing so that the discharge valve unit 8 is fixed in a press-fit manner to the pump housing 1.

The inner circumferential surface of the valve housing 8e is formed in a shape of guiding the discharge valve spring 8d at an outer circumferential side of the discharge valve spring 8d. In other words, the discharge valve spring 8d is guided by an inside diameter cylindrical guide portion 8g integrally provided in the valve housing 8e. Therefore, there is no need to separately provide a guide portion for the discharge valve spring 8d, and violent displacement of the discharge valve spring 8d can be suppressed. The inside diameter cylindrical guide portion 8g and the valve housing 8e are integrally formed of the same member. The valve housing 8e is formed such that a size of the portion (valve holding portion 8c) in the crossing direction for restricting the displacement of the discharge valve member 8b in the crossing direction is greater than a size of the inside diameter cylindrical guide portion 8g in the crossing direction.

When the fuel pressure in the pressurizing chamber 11 becomes high pressure, the fluid action inside the discharge valve becomes violent and the discharge valve member 8b is violently displaced in a direction crossing the stroke axis thereof. Thus, the position where the discharge valve member 8b hits a seat surface member 8a3 provided on the valve seat member 8a becomes inconstant during valve closure. Thus, abnormal wear occurs on the seat surface, resulting in a reduction in airtightness, preventing retention of the residual pressure capability. Therefore, a restriction portion 8c1 is provided to restrict the violent displacement of the discharge valve member 8b in a direction crossing the stroke axis during valve opening and closing of the discharge valve member 8b.

The restriction portion 8c1 is disposed such that the length of the restriction portion 8c1 parallel to the stroke axis is a length by which the uncontrolled action of the discharge valve member 8b can be suppressed even when the discharge valve member 8c is in a fully closed or fully opened state. Thus, when the discharge valve member 8b (ball valve) is any of an opened state and a closed state, the displacement of the discharge valve member 8b in the crossing direction is restricted by the valve holding portion 8c, which is an inner circumferential surface of the valve housing 8e. The restriction portion 8c1 on the inner circumferential side of the valve housing 8e and the valve housing 8e are integrally formed of the same member.

Thus, when the valve holding portion 8c is in any of a fully opened state and a fully closed state, the maximum diameter position 8b2 of the discharge valve member 8b can be constantly slidably enclosed. Therefore, the orbit of the discharge valve member 8b is restricted in a straight line in any discharge state regardless of operation conditions that vary from moment to moment. Thus, the discharge valve member 8b is seated on a steady position of the seat surface portion 8a3, enabling suppression of wear. In addition, the airtightness is held and the residual pressure capability can be retained.

In addition, a recess portion is formed on the valve housing 8e in a direction from the valve seat member 8a to the discharge valve spring 8d. The recess portion forms the valve holding portion 8c, and the displacement of the discharge valve member 8b in a direction crossing the stroke axis (the crossing direction) is restricted.

A valve housing discharge hole 8e1 of the valve housing 8e is provided on a side surface of the valve housing 8e, and a valve housing discharge hole 8e2 is also provided in a direction to the fuel discharge port 12. An annular fuel passage 8f formed between the oppositely facing surfaces of the valve seat member 8a and the valve holding portion 8c is provided in a position that is communicated with the valve housing discharge hole 8e1. With regard to an opening area between the discharge valve member 8b and the seat surface member 8a3, a passage area where the fuel passage does not cause interference in the discharge direction can be retained, resulting in a shape by which the discharge efficiency is expected to be improved. Thus, the fuel travels toward the discharge port 12 without a reduction in flow rate passage diameter after the seat surface portion 8a3, and the maximum flow rate can be expected to be increased.

The discharge valve unit 8 is fixed in a press-fit manner to the pump housing 1, and then a joint 12a is fixed to the pump housing 1. First, the joint 12a is fixed in a press-fit manner to the pump housing 1 at a discharge joint press-fit portion 12a1, and then a weld portion 12a2 is fixed by laser welding. In the manner of the present example, as compared to the case where the discharge valve is incorporated to the inside of the discharge joint 12a, the layout has a degree of freedom. Therefore, the present invention can be tailored to the layout of each engine, enabling an increase in versatility without the need to prepare a special joint.

As illustrated in FIG. 7, the passage 8e2 is provided through a discharge-side end of the valve housing 8e. Therefore, regarding the discharge valve unit 8, in a state where there is no fuel pressure difference between the pressurizing chamber 11 and the discharge port 12, the discharge valve member 8b is in a seated state (valve closed state) by being in press-contact with the seat surface portion 8a3 of the valve seat member 8a by the biasing force of the discharge valve spring 8d. Only when the fuel pressure in the pressurizing chamber 11 becomes equal to greater than the valve opening pressure of the discharge valve spring 8d with respect to the fuel pressure of the discharge port 12, the discharge valve member 8b is opened against the discharge valve spring 8c as illustrated in FIG. 8, and the fuel in the pressurizing chamber 11 is discharged to the common rail 23 via the discharge port 12.

In this case, the fuel passes through the passage 8e1 provided through the valve housing 8e, and is pumped to the discharge port 12 from the pressurizing chamber 11. Then, when a sum of the fuel pressure of the discharge port 12 and the valve opening pressure of the discharge valve spring 8d becomes greater than the fuel pressure of the pressurizing chamber 11, the discharge valve member 8b is closed into an original state. Thus, the discharge valve member 8b can be closed after the high-pressure fuel is discharged.

In addition, the valve opening pressure of the discharge valve member 8b is set to 0.1 MPa or less. As described above, a median value of the feed pressure is 0.4 MPa. In consideration of pulsation, the discharge valve member 8b is set to be opened at a feed pressure of 0.2 MPa to 1.0 MPa. Thus, even when the fuel cannot be highly pressurized due to failure of the high-pressure fuel supply pump or the like, the fuel is supplied to the common rail by the feed pressure, and the injectors 24 can inject the fuel.

When opened, the discharge valve member 8b contacts the stopper function portion 8e3 for the valve member 8b, the stopper function portion 8e3 being provided on an inner circumferential portion of the valve housing 8e, and the operation is restricted. Therefore, the stroke of the discharge valve member 8b is properly determined by the stopper function portion 8e3 for the valve member 8b. If the stroke is too large, the fuel discharged to the fuel discharge port 12 flows back into the pressurizing chamber 11 due to delay of closure of the discharge valve member 8b, and the efficiency as the high-pressure pump is reduced. In the present example, the stroke of the discharge valve spring 8d is set to 0.3 mm to 1.2 mm.

With the aforementioned configuration, the discharge valve unit 8 becomes a check valve that restricts the circulation direction of the fuel.

When the valve housing 8e is deformed, the pressurizing chamber 11 cannot be hydraulically disconnected from the discharge port 12, and the high-pressure fuel in the discharge port 12 flows back to the pressurizing chamber 11. In addition, when the seat surface portion 8a3 of the valve seat member 8a is deformed, the fuel cannot be seated when the suction valve is closed. Similarly, in this case, the high-pressure fuel in the discharge port 12 flows back to the pressurizing chamber 11. As a result, there is a problem that the efficiency of the high-pressure fuel supply pump is reduced.

The outer circumference of a cylinder 6 is held by a cylindrical fitting portion 7a of a cylinder holder 7. When a thread 7g formed on the outer circumference of the cylinder holder 7 is threaded onto a thread 1b formed on the pump housing 1, the cylinder 6 is fixed to the pump housing 1. In addition, a plunger seal 13 is held at a lower end of the cylinder holder 7 by a seal holder 15, which is fixed in a press-fit manner to an inner circumference cylindrical surface 7c of the cylinder holder 7, and the cylinder holder 7. At this time, the plunger seal 13 is held by the inner circumference cylindrical surface 7c of the cylinder holder 7 such that the axis is coaxial to the axis of the cylindrical fitting portion 7a. The plunger 2 and the plunger seal 13 are disposed in a slidably contacting state at a lower end portion of the cylinder 6 in the drawing.

Thus, the fuel in a seal chamber 10f is prevented from flowing-into a tappet 3 side, i.e., the inside of the engine. Simultaneously, a lubricant (including engine oil) for lubricating the slide portion in the engine room is prevented from flowing to the inside of the pump housing 1.

In addition, an outer circumference cylindrical surface 7b is provided on the cylinder holder 7, and a groove 7d onto which an O-ring 61 is fit is formed thereon. The O-ring 61 disconnects the cam side of the engine from the outside by means of the inner wall of a fitting hole 70 of the engine side and the groove 7d of the cylinder holder 7, preventing leakage of the engine oil to the outside.

The cylinder 6 includes a press-bonding portion 6a crossing the direction of the reciprocating movement of the plunger 2, and the press-bonding portion 6a is press-bonded to a press-bonded surface 1a of the pump housing 1. The press-bonding is carried out by a thrust force of the fastening of the thread. The pressurizing chamber 11 is shaped by this press-bonding. The thread fastening torque needs to be controlled such that the fuel is not leaked to the outside from the pressurizing chamber 11 via the press-bonding portion even when the fuel in the pressurizing chamber 11 is pressurized to a high pressure.

In addition, in order to keep an appropriate slide length between the plunger 2 and the cylinder 6, it is structured such that the cylinder 6 is deeply inserted into the pressurizing chamber 11. On the side of the cylinder 6 near the pressurizing chamber 11 beyond the press-bonding portion 6a, a clearance 1B is provided between the outer circumference of the cylinder 6 and the inner circumference of the pump housing 1. The outer circumference of the cylinder 6 is held by the cylindrical fitting portion 7a of the cylinder holder 7. Therefore, when the clearance 1B is provided, the outer circumference of the cylinder 6 cannot contact the inner circumference of the pump housing 1.

In the above manner, the cylinder 6 slidably holds the plunger 2, which moves back and forth in the pressurizing chamber 11, along its back-and-forth movement direction.

The tappet 3 is provided on a lower end of the plunger 2. The tappet 3 converts the rotary movement of a cam 5, which is attached to a cam shaft of the engine, into an up-and-down movement and transmits it to the plunger 2. The plunger 2 is press-bonded to the tappet 3 by a spring 4 via a retainer 16. The retainer 16 is fixed to the plunger 2 in a press-fit manner. Thus, the plunger 2 can be moved back and forth (reciprocatingly) upward and downward by the rotary movement of the cam 5.

Here, the suction flow channel 10g is connected to the seal chamber 10f via a suction flow channel 10d and a suction flow channel 10e provided in the cylinder holder 7, and the seal chamber 10f is always connected to the pressure of the sucked fuel. When the fuel in the pressurizing chamber 11 is pressurized to a high pressure, a very little high-pressure fuel flows into the seal chamber 10f via the slide clearance between the cylinder 6 and the plunger 2, and the inflow high-pressure fuel is relieved by the suction pressure, and the plunger seal 13 is not damaged by high pressure.

In addition, the plunger 2 includes a large diameter portion 2a, which is slid on the cylinder 6, and a small diameter portion 2b, which is slid on the plunger seal 13. The diameter of the large diameter portion 2a is set to be greater than the diameter of the small diameter portion 2b, and both are set coaxially. The slide portion with respect to the cylinder 6 is the large diameter portion 2a, and the slide portion with respect to the plunger seal 13 is the small diameter portion 2b. Thus, a joining portion between the large diameter portion 2a and the small diameter portion 2b is present in the seal chamber 10f. Therefore, the volume of the seal chamber 10f is changed by the slide movement of the plunger 2. Accordingly, the fuel passes the suction flow channel 10d and is moved between the seal chamber 10f and the suction flow channel 10g.

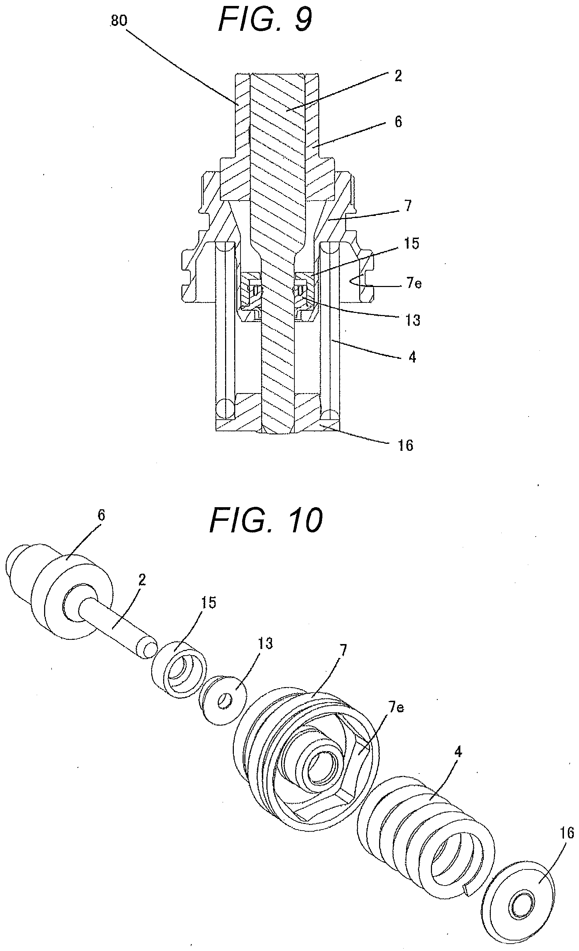

FIG. 9 illustrates a state before the cylinder holder 7 is fixed to the pump housing 1 by a thread.

A plunger unit 80 includes the plunger 2, the cylinder 6, the seal holder 15, the plunger seal 13, the cylinder holder 7, the spring 4, and the retainer 16.

FIG. 10 illustrates a method of assembling the plunger unit 80.

First, the plunger 2, the cylinder 6, the seal holder 15, and the plunger seal 13 are incorporated into the cylinder holder 7 from an upper left side in the drawing. In this case, the seal holder 15 is fixed in a press-fit manner to the inner circumference cylindrical surface 7c of the cylinder holder 7. Then, the spring 4 and the retainer 16 are incorporated from a lower right side in the drawing. In this case, the retainer 16 is fixed in a press-fit manner to the plunger 2.

The plunger unit 80 thus assembled is fixed in a fastened manner to the pump housing 1 by the thread after the O-ring 61 and an O-ring 62 are mounted. The fastening is carried out by a hexagonal portion 7e formed on the cylinder holder 7. The hexagonal portion 7e has an internally hexagonal shape, and a dedicated tool is used to generate a torque to fasten the thread. The torque is controlled to control the press-bonded surface pressure between the press-bonding portion 6a and the press-bonded surface 1a.

The metal diaphragm damper 9 is formed of two metal diaphragms and the outer circumferences are fixed to one another by welding across the entire circumference at a weld portion with a gas being enclosed in a space between the diaphragms. The mechanism is configured such that, when low-pressure pressure pulsation is applied on both surfaces of the metal diaphragm damper 9, the volume of the metal diaphragm damper 9 is changed and thus the low-pressure pressure pulsation is reduced.

The high-pressure fuel supply pump is fixed to the engine with an attachment flange 41, bolts 42, and bushings 43. The attachment flange 41 is joined to the pump housing 1 by welding across the entire circumference of a weld portion 41a and forms an annular fixed portion. In the present example, laser welding is used.

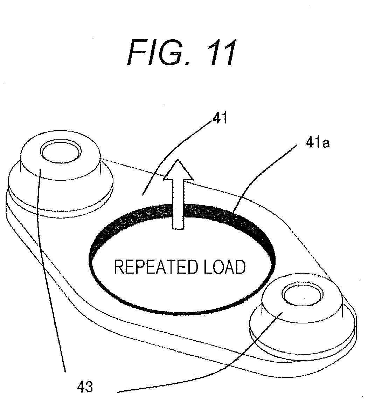

FIG. 11 illustrates an external view of the attachment flange 41 and the bushings 43. The drawing illustrates the attachment flange 41 and the bushings 43 only and does not illustrate the other parts.

The two bushings 43 are attached to the attachment flange 41 and are attached to the side opposite from the engine. The two bolts 42 are screwed to each of threads formed on the engine side. The two bushings 43 and the attachment flange 41 are pressed against the engine so that the high-pressure fuel supply pump is fixed to the engine.

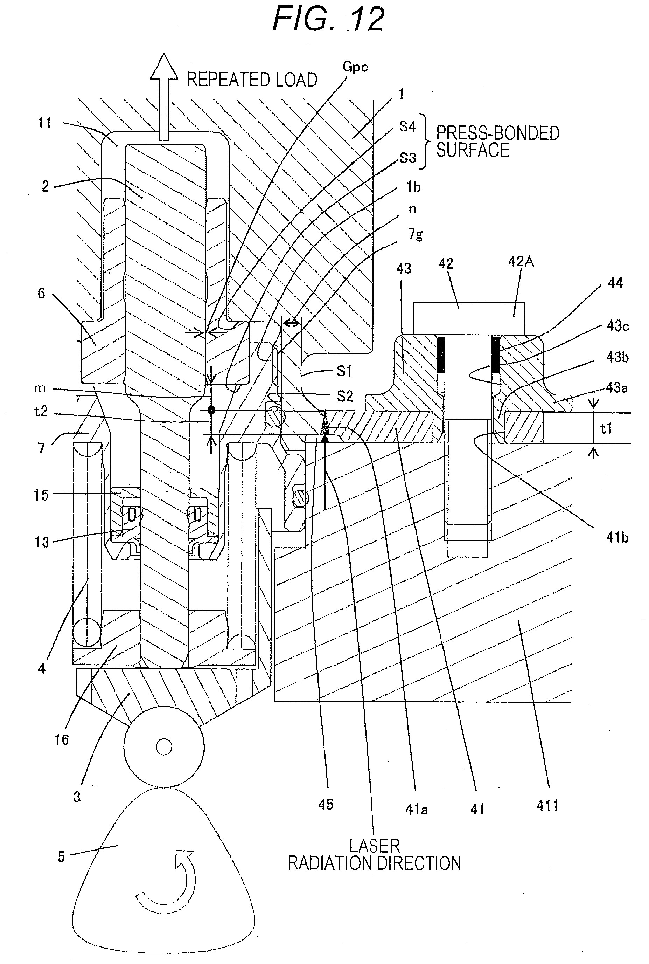

FIG. 12 illustrates an enlarged view of the attachment flange 41, the bolts 42, and the bushing 43 portions.

The bushing 43 includes a flange portion 43a and a swaged portion 43b. First, the swaged portion 43b is joined in a swaged manner to an attachment hole of the attachment flange 41. Then, the attachment flange 41 is annularly joined in a welded manner by laser welding to the pump housing 1 at the weld portion 41a. Then, a fastener 44 made of plastic is inserted into the bushing 43, and furthermore the bolt 42 is inserted into the fastener 44. The fastener 44 plays a role to temporarily fix the bolt 42 to the bushing 43. In other words, until the high-pressure fuel supply pump is attached to the engine, the bolt 42 is fixed so as not to be removed from the bushing 43. When the high-pressure fuel supply pump is fixed to the engine, the bolt 42 is fixed in a screwed manner to a threaded portion provided on the engine side. In this case, the bolt 42 can be rotated in the bushing 43 by the fastening torque of the bolt 42.

In the present example, before the high-pressure fuel supply pump is fixed to the engine, the bolts 42 are attached to the high-pressure fuel supply pump to provide a removal prevention mechanism. However, when the bolts 42 are mounted during attachment to the engine, the fastener 44 is not particularly necessary.

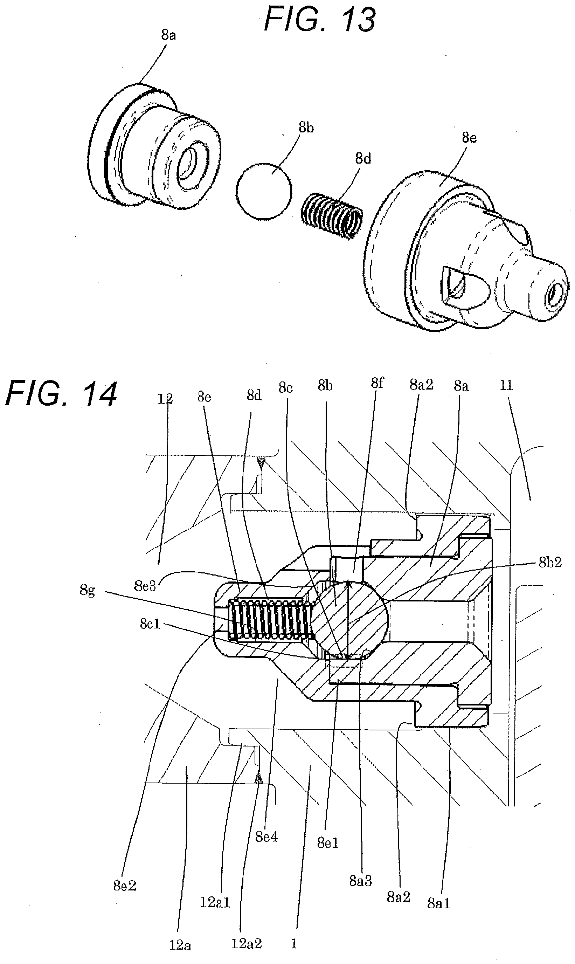

FIG. 13 illustrates an exploded perspective view of the discharge valve unit 8. As illustrated in the drawing, the multiple discharge holes 8e1, which discharge fluid, are formed on a side surface of the valve housing 8e in positions corresponding to the discharge valve member 8b. In addition, the valve holding portion 8c is formed of a member provided between the two adjacently arranged discharge holes 8e1. The valve holding portion 8c is formed in a shape that restricts the displacement of the discharge valve member 8b (ball valve) in the stroke crossing direction. In addition, the multiple discharge holes 8e1 are formed between the seat surface portion 8a3 of the valve seat member 8a and the surface (stopper function portion 8e3) oppositely facing the seat surface portion 8a3.

The valve housing 8e further includes the discharge hole 8e2, which is different from the multiple discharge holes 8el, on the side opposite from the discharge valve member 8b with respect to the discharge valve spring 8d.

### Example 2

A second example of the present invention is described in conjunction with the drawings. The present example is the same as the configuration described in Example 1 except that the discharge valve unit 8, which is the discharge valve mechanism described in Example 1, is formed of the parts excluding the discharge valve spring 8d, and the description in conjunction with the drawings is omitted. Regarding the discharge valve unit (discharge valve mechanism) 8, in a state where there is no fuel pressure difference between the pressurizing chamber 11 and the discharge port 12, the discharge valve member 8b arbitrarily and freely stays between the seat surface portion 8a3 of the valve seat member 8a and the stopper function portion 8e3 for the valve member 8b, the stopper function portion 8e3 being provided on the inner circumferential portion of the valve housing 8e.

Only when the fuel pressure in the pressurizing chamber 11 becomes equal to or greater than the fuel pressure of the discharge port 12, the discharge valve member 8b is opened as illustrated in FIG. 8, and the fuel in the pressurizing chamber 11 is discharged to the common rail 23 via the discharge port 12. In this case, the fuel passes through the passage 8e1 provided through the valve housing 8e and is pumped to the discharge port 12 from the pressurizing chamber 11. Then, when the fuel pressure of the discharge port 12 becomes greater than the fuel pressure of the pressurizing chamber 11, the discharge valve member 8b is closed into an original state. Thus, the discharge valve member 8b can be closed after the high-pressure fuel is discharged.

The aforementioned configuration enables a lower cost configuration.

### Example 3

A third example of the present invention is described in conjunction with FIG. 14. A method of mounting the discharge valve unit (discharge valve mechanism) 8 on the pump housing 1 or the like is the same as that of the first example, and the description is omitted.

When the fuel pressure in the pressurizing chamber 11 becomes high pressure, the fluid action inside the discharge valve becomes violent, and the discharge valve member 8b uncontrollably moves in a direction crossing the stroke axis. Thus, when the discharge valve member 8b is closed, the position where the discharge valve member 8b hits the seat surface member 8a3 provided on the valve seat member 8a becomes inconstant. Therefore, abnormal wear occurs on the seat surface, the airtightness is reduced, and the residual pressure capability cannot be retained. Hence, the restriction portion 8c1 is integrally provided on the seat member 8a in order to suppress the uncontrolled action of the discharge valve member 8b in a direction of crossing the stroke axis when the discharge valve member 8b is opened and closed. The restriction portion 8c1 is disposed such that the length parallel to the stroke axis is a length by which the uncontrolled action of the discharge valve member 8b can be suppressed even when the discharge valve member 8c is in a fully closed or fully opened state.

Thus, even when the valve holding portion 8c integrally provided on the seat member 8a is in a fully closed or fully opened state, the maximum diameter position 8b2 of the discharge valve member 8b can be constantly slidably enclosed by the restriction portion 8c1 formed on the valve holding portion 8c, the orbit of the discharge valve member 8b is restricted in a straight line in any discharge state regardless of operation conditions that vary from moment to moment. Thus, the discharge valve member 8b is seated in a steady position of the seat surface portion 8a3, and the wear can be suppressed, the airtightness is held, and the residual pressure capability can be retained. Reference Signs List

- 1: pump housing
- 1A: protrusion portion
- 1B: clearance
- 1a: press-bonded surface
- 1b: thread
- 1d: conical surface
- 2: plunger
- 2a: large diameter portion
- 2b: small diameter portion
- 3: tappet
- 4: spring
- 5: cam
- 6: cylinder
- 6a: press-bonding portion
- 7: cylinder holder
- 7a: cylindrical fitting portion
- 7b: outer circumference cylindrical surface
- 7c: inner circumference cylindrical surface
- 7d: groove
- 7e: hexagonal portion
- 8: discharge valve unit (discharge valve mechanism)
- 8a: valve seat member
- 8a1: press-fit portion
- 8a2: load reception portion
- 8a3: seat surface portion
- 8b: discharge valve member
- 8b2: maximum diameter position
- 8c: valve holding portion
- 8c1: restriction portion
- 8d: discharge valve spring
- 8e: valve housing
- 8e1: valve housing discharge hole
- 8e2: valve housing discharge hole
- 8f: annular fuel passage
- 8g: inside diameter cylindrical guide portion
- 9: metal diaphragm damper
- 10a: suction inlet
- 10a: fuel suction inlet
- 10b: suction flow channel
- 10c: damper chamber
- 10d: suction flow channel
- 10e: suction flow channel
- 10f: seal chamber
- 10g: suction flow channel
- 11: pressurizing chamber
- 11A: pressurizing chamber recess
- 11A: pressurizing chamber discharge passage
- 11B: annular projection
- 11C: metal cylindrical member
- 12: fuel discharge port
- 12a: discharge joint
- 12a1: discharge joint press-fit portion
- 12a2: weld portion
- 13: plunger seal
- 15: seal holder
- 16: retainer
- 20: fuel tank
- 21: field pump
- 23: common rail
- 2.4: injector
- 26: pressure sensor
- 27: ECU
- 28: suction pipe
- 30: electromagnetic driven valve mechanism
- 30A: hole for mounting electromagnetic driven valve mechanism
- 30a: suction port
- 31: plunger rod
- 31a: suction valve portion
- 31b: rod portion
- 31c: anchor fixation portion
- 32: valve seat member
- 32a: suction valve seat portion
- 32b: suction passage portion
- 32c: press-fit portion
- 32d: slide portion
- 33: first core portion
- 33a: first core portion inner circumference
- 34: spring
- 35: anchor
- 35a: anchor inner circumference
- 36: second core portion
- 36a: magnetic orifice portion
- 37: suction valve unit
- 37a: weld portion
- 37b: weld portion
- 37c: weld portion
- 38: suction inlet
- 39: connector unit
- 41: attachment flange
- 41a: weld portion
- 42: bolt
- 43: bushing
- 43a: flange portion
- 43b: swaged portion
- 44: fastener
- 51: yoke
- 52: coil winding frame (bobbin)
- 53: electromagnetic coil
- 54: lead wire
- 55: lead wire weld portion
- 56: terminal
- 58: connector portion
- 61: O-ring
- 62: O-ring
- 70: fitting hole
- 80: plunger unit
- 101: suction joint
- 101A: metal cylindrical member
- 102: suction filter

## Claims

1. A high-pressure fuel supply pump including a pump housing (1) formed with a pressurizing chamber (11) configured to pressurize fuel and a valve mechanism (8) provided on a discharge side of the pressurizing chamber (11),
wherein the valve mechanism (8) includes:
a seat member (8a) with a seat surface (8a3),
a valve (8b) having a spherical shape and configured to contact the seat surface (8a3), and
a valve housing (8e) configured to accommodate the seat member (8a) and the valve (8b),
wherein the valve mechanism (8) is configured to be assembled as a discharge valve unit by assembling the valve housing (8e) and the seat member (8a), and the discharge valve unit is press-fitted into a recess (11A) of the pump housing (1),
wherein the valve housing (8e) has a restriction portion (8c1) for restricting displacement of the valve (8b) in a crossing direction crossing an opening and closing direction of the valve (8b) and a load reception portion (8a2) for receiving a load when the discharge valve unit is press-fitted to the pump housing (1), and
**characterized in that** the valve housing (8e) has a valve holding portion (8c) slidably enclosing the outer circumference of the valve (8b).

2. The high-pressure fuel supply pump according to claim 1, wherein the valve mechanism (8) comprises an elastic body (8d) configured to bias the valve (8b) in a closing direction,
wherein the valve housing (8e) further accommodates the elastic body (8d).

3. The high-pressure fuel supply pump according to claim 1, wherein the valve mechanism (8) comprises an elastic body (8d) configured to bias the valve (8b) in a closing direction,
wherein, in a fuel discharge direction, the seat member (8a), the valve (8b), and the elastic body (8d) are arranged in an order of the seat member (8a), the valve (8b), and the elastic body (8d),
in an opening and closing direction of the valve (8b), the seat member (8a), the valve (8b), and the elastic body (8d) are arranged to overlap with the valve housing (8e).

4. The high-pressure fuel pump supply according to claim 2,
wherein the valve housing (8e) is formed in a shape of guiding the elastic body (8d) at an outer circumferential side of the elastic body (8d).

5. The high-pressure fuel supply pump according to claim 4,
wherein the valve housing (8e) is formed such that a size of a portion in the crossing direction for restricting displacement of the valve (8b) in the crossing direction is greater than a size of a portion for guiding the elastic body (8d) in the crossing direction.

6. The high-pressure fuel supply pump according to claim 2,
wherein the valve housing (8e) includes a recess portion (8c) in a direction toward the elastic body (8d) from the seat member (8a), and displacement of the valve (8b) in the crossing direction is restricted by the recess portion (8c).

7. The high-pressure fuel supply pump according to claim 2,
wherein an inner circumferential surface (8c) of the valve housing (8e) is formed in a shape of restricting displacement of the valve (8b) in the crossing direction.

8. The high-pressure fuel supply pump according to claim 2,
wherein an inner circumferential surface (8g) of the valve housing (8e) is formed in a shape of guiding the elastic body (8d) at an outer circumferential side of the elastic body (8d).

9. The high-pressure fuel supply pump according to claim 1,
wherein a plurality of discharge holes (8e1) configured to discharge fluid are formed through a side surface of the valve housing (8e), and
the valve housing (8e) is formed of a member provided between two adjacently arranged discharge holes (8e1) into a shape of restricting displacement of the valve (8b) in the crossing direction.

10. The high-pressure fuel supply pump according to claim 1,
wherein a plurality of discharge holes (8e1) configured to discharge fluid are formed through a side surface of the valve housing (8e), and
the plurality of discharge holes (8e1) are formed between the seat surface (8a3) and a surface of the valve housing (8e) oppositely facing the seat surface (8a3).

11. The high-pressure fuel supply pump according to claim 2,
wherein the restriction portion (8c, 8c1) and the valve housing (8e) are integrally formed of the same member.

12. The high-pressure fuel supply pump according to claim 11, wherein the valve mechanism (8) comprises, on an inner circumferential side of the valve housing (8e), a guide portion (8g) configured to guide the elastic body (8d) at an outer circumferential side of the elastic body (8d),
wherein the guide portion (8g) and the valve housing (8e) are integrally formed of the same member.

13. The high-pressure fuel supply pump according to claim 12,
wherein a size of the restriction portion (8c, 8c1) in the crossing direction is formed to be greater than a size of the guide portion in the crossing direction.

14. The high-pressure fuel supply pump according to claim 1,
wherein a plurality of discharge holes (8e1) configured to discharge fluid are formed through a side surface of the valve housing (8e) in positions corresponding to the valve (8b).

15. The high-pressure fuel supply pump according to claim 14, wherein the valve mechanism (8) comprises an elastic body (8d) configured to bias the valve (8b) in a closing direction,
wherein the valve housing (8e) further accommodates the elastic body (8d), and a discharge hole (8e2) different from the plurality of discharge holes (8e1) is formed on a side opposite from the valve (8b) with respect to the elastic body (8d).

## Patentansprüche

1. Hochdruck-Kraftstoffzufuhrpumpe, die ein Pumpengehäuse (1), das mit einer Druckbeaufschlagungskammer (11) gebildet ist, die konfiguriert ist, Kraftstoff mit Druck zu beaufschlagen, und einen Ventilmechanismus (8), der auf einer Auslassseite der Druckbeaufschlagungskammer (11) vorgesehen ist, enthält,
wobei der Ventilmechanismus (8) Folgendes umfasst:
ein Sitzelement (8a) mit einer Sitzfläche (8a3),
ein Ventil (8b), das eine Kugelform aufweist und konfiguriert ist, mit der Sitzfläche (8a3) in Kontakt zu sein, und
ein Ventilgehäuse (8e), das konfiguriert ist, das Sitzelement (8a) und das Ventil (8b) aufzunehmen,
wobei der Ventilmechanismus (8) konfiguriert ist, als eine Auslassventileinheit zusammengefügt zu werden, indem das Ventilgehäuse (8e) und das Sitzelement (8a) zusammengefügt werden und die Auslassventileinheit in einer Vertiefung (11A) des Pumpengehäuses (1) durch Presspassung angeordnet wird,
wobei das Ventilgehäuse (8e) einen Begrenzungsabschnitt (8c1) zum Begrenzen einer Verlagerung des Ventils (8b) in einer Querrichtung, die eine Richtung des Öffnens und Schließens des Ventils (8b) kreuzt, und einen Lastaufnahmeabschnitt (8a2) zum Aufnehmen einer Last, wenn die Auslassventileinheit am Pumpengehäuse (1) durch Presspassung angeordnet wird, aufweist, und
**dadurch gekennzeichnet, dass** das Ventilgehäuse (8e) einen Ventilhalteabschnitt (8c) aufweist, der den Außenumfang des Ventils (8b) gleitend umschließt.

2. Hochdruck-Kraftstoffzufuhrpumpe nach Anspruch 1, wobei der Ventilmechanismus (8) einen elastischen Körper (8d) umfasst, der konfiguriert ist, das Ventil (8b) in einer Schließrichtung vorzubelasten,
wobei das Ventilgehäuse (8e) ferner den elastischen Körper (8d) aufnimmt.

3. Hochdruck-Kraftstoffzufuhrpumpe nach Anspruch 1, wobei der Ventilmechanismus (8) einen elastischen Körper (8d) umfasst, der konfiguriert ist, das Ventil (8b) in einer Schließrichtung vorzubelasten,
wobei das Sitzelement (8a), das Ventil (8b) und der elastische Körper (8d) in einer Kraftstoffauslassrichtung in einer Reihenfolge des Sitzelements (8a), des Ventils (8b) und des elastischen Körpers (8d) angeordnet sind,
wobei das Sitzelement (8a), das Ventil (8b) und der elastische Körper (8d) in einer Richtung des Öffnens und Schließens des Ventils (8b) derart angeordnet sind, dass sie mit dem Ventilgehäuse (8e) überlappen.

4. Hochdruck-Kraftstoffzufuhrpumpe nach Anspruch 2,
wobei das Ventilgehäuse (8e) in einer Form zum Führen des elastischen Körpers (8d) auf einer Außenumfangsseite des elastischen Körpers (8d) ausgebildet ist.

5. Hochdruck-Kraftstoffzufuhrpumpe nach Anspruch 4,
wobei das Ventilgehäuse (8e) derart gebildet ist, dass eine Abmessung eines Abschnitts in der Querrichtung zum Begrenzen einer Verlagerung des Ventils (8b) in der Querrichtung größer als eine Abmessung eines Abschnitts zum Führen des elastischen Körpers (8d) in der Querrichtung ist.

6. Hochdruck-Kraftstoffzufuhrpumpe nach Anspruch 2,
wobei das Ventilgehäuse (8e) einen Vertiefungsabschnitt (8c) in einer Richtung vom Sitzelement (8a) zum elastischen Körper (8d) enthält und eine Verlagerung des Ventils (8b) in der Querrichtung durch den Vertiefungsabschnitt (8c) begrenzt wird.

7. Hochdruck-Kraftstoffzufuhrpumpe nach Anspruch 2,
wobei eine Innenumfangsfläche (8c) des Ventilgehäuses (8e) in einer Form zum Begrenzen einer Verlagerung des Ventils (8b) in der Querrichtung ausgebildet ist.

8. Hochdruck-Kraftstoffzufuhrpumpe nach Anspruch 2,
wobei eine Innenumfangsfläche (8g) des Ventilgehäuses (8e) in einer Form zum Führen des elastischen Körpers (8d) auf einer Außenumfangsseite des elastischen Körpers (8d) ausgebildet ist.

9. Hochdruck-Kraftstoffzufuhrpumpe nach Anspruch 1,
wobei mehrere Auslasslöcher (8e1), die konfiguriert sind, ein Fluid auszulassen, durch eine Seitenfläche des Ventilgehäuses (8e) gebildet sind, und
das Ventilgehäuse (8e) mit einem Element, das zwischen zwei benachbart angeordneten Auslasslöchern (8e1) vorgesehen ist, in einer Form zum Begrenzen einer Verlagerung des Ventils (8b) in der Querrichtung ausgebildet ist.

10. Hochdruck-Kraftstoffzufuhrpumpe nach Anspruch 1,
wobei mehrere Auslasslöcher (8e1), die konfiguriert sind, ein Fluid auszulassen, durch eine Seitenfläche des Ventilgehäuses (8e) gebildet sind, und
die mehreren Auslasslöcher (8e1) zwischen der Sitzfläche (8a3) und einer Fläche des Ventilgehäuses (8e), die der Sitzfläche (8a3) gegenüberliegend zugewandt ist, gebildet sind.

11. Hochdruck-Kraftstoffzufuhrpumpe nach Anspruch 2,
wobei der Begrenzungsabschnitt (8c, 8c1) und das Ventilgehäuse (8e) aus demselben Element einteilig ausgebildet sind.

12. Hochdruck-Kraftstoffzufuhrpumpe nach Anspruch 11, wobei der Ventilmechanismus (8) auf einer Innenumfangsseite des Ventilgehäuses (8e) einen Führungsabschnitt (8g) umfasst, der konfiguriert ist, den elastischen Körper (8d) auf einer Außenumfangsseite des elastischen Körpers (8d) zu führen,
wobei der Führungsabschnitt (8g) und das Ventilgehäuse (8e) aus demselben Element einteilig ausgebildet sind.

13. Hochdruck-Kraftstoffzufuhrpumpe nach Anspruch 12,
wobei eine Abmessung des Begrenzungsabschnitts (8c, 8c1) in der Querrichtung derart gebildet ist, dass sie größer als eine Abmessung des Führungsabschnitts in der Querrichtung ist.

14. Hochdruck-Kraftstoffzufuhrpumpe nach Anspruch 1,
wobei mehrere Auslasslöcher (8e1), die konfiguriert sind, ein Fluid auszulassen, an Positionen, die dem Ventil (8b) entsprechen, durch eine Seitenfläche des Ventilgehäuses (8e) gebildet sind.

15. Hochdruck-Kraftstoffzufuhrpumpe nach Anspruch 14, wobei der Ventilmechanismus (8) einen elastischen Körper (8d) umfasst, der konfiguriert ist, das Ventil (8b) in einer Schließrichtung vorzubelasten,
wobei das Ventilgehäuse (8e) ferner den elastischen Körper (8d) aufnimmt und ein Auslassloch (8e2), dass sich von den mehreren Auslasslöchern (8e1) unterscheidet, auf einer Seite, die dem Ventil (8b) in Bezug auf den elastischen Körper (8d) gegenüberliegt, gebildet ist.

## Revendications

1. Pompe d'alimentation en carburant à haute pression incluant un boîtier de pompe (1) formé avec une chambre de pressurisation (11) configurée pour pressuriser du carburant et un mécanisme à vanne (8) prévu sur un côté de décharge de la chambre de pressurisation (11),
dans laquelle le mécanisme à vanne (8) inclut :
un élément de siège (3a) avec une surface de siège (8a3),
une vanne (8b) ayant une forme sphérique et configurée pour venir en contact avec la surface de siège (8a3), et
un boîtier de vanne (8e) configuré pour loger l'élément de siège (8a) et la vanne (8b),
dans laquelle le mécanisme à vanne (8) est configuré pour être assemblé sous forme d'une unité de vanne de décharge en assemblant le boîtier de vanne (8e) et l'élément de siège (8a), et l'unité de vanne de décharge est emmanchée à force jusque dans un évidement (11A) du boîtier de pompe (1),
dans laquelle le boîtier de vanne (8e) a une portion de restriction (8c1) destinée à restreindre un déplacement de la vanne (8b) dans une direction transversale traversant une direction d'ouverture et de fermeture de la vanne (8b), et une portion de réception de charge (8a2) destinée à recevoir une charge quand la vanne de décharge est emmanchée à force sur le boîtier de pompe (1), et
**caractérisée en ce que**
le boîtier de vanne (8e) a une portion de maintien de vanne (8c) enfermant de manière coulissante la circonférence extérieure de la vanne (8b).

2. Pompe d'alimentation en carburant à haute pression selon la revendication 1, dans laquelle le mécanisme à vanne (8) comprend un corps élastique (8d) configuré pour solliciter la vanne (8b) dans une direction de fermeture,
dans laquelle le boîtier de vanne (8e) loge en outre le corps élastique (8d).

3. Pompe d'alimentation en carburant à haute pression selon la revendication 1, dans laquelle le mécanisme à vanne (8) comprend un corps élastique (8d) configuré pour solliciter la vanne (8b) dans une direction de fermeture,
dans laquelle, dans une direction de décharge de carburant, l'élément de siège (8a), la vanne (8b) et le corps élastique (8d) sont agencés dans un ordre de l'élément de siège (8a), la vanne (8b) et le corps élastique (8d),
dans une direction d'ouverture et de fermeture de la vanne (8b), l'élément de siège (8a), la vanne (8b) et le corps élastique (8d) sont agencés de manière à se chevaucher avec le boîtier de vanne (8e).

4. Pompe d'alimentation en carburant à haute pression selon la revendication 2,
dans laquelle le boîtier de vanne (8e) est réalisé dans une forme permettant un guidage du corps élastique (8d) au niveau d'un côté circonférentiel extérieur du corps élastique (8d).

5. Pompe d'alimentation en carburant à haute pression selon la revendication 4,
dans laquelle le boîtier de vanne (8e) est formé de sorte qu'une taille d'une portion dans la direction transversale destinée à restreindre un déplacement de la vanne (8b) dans la direction transversale est supérieure à une taille d'une portion destinée à guider le corps élastique (8d) dans la direction transversale.

6. Pompe d'alimentation en carburant à haute pression selon la revendication 2,
dans laquelle le boîtier de vanne (8e) inclut une portion d'évidement (8c) dans une direction vers le corps élastique (8d) depuis l'élément de siège (8a), et un déplacement de la vanne (8b) dans la direction transversale est restreint par la portion d'évidement (8c).

7. Pompe d'alimentation en carburant à haute pression selon la revendication 2,
dans laquelle une surface circonférentielle intérieure (8c) du boîtier de vanne (8e) est réalisée dans une forme permettant une restriction d'un déplacement de la vanne (8b) dans la direction transversale.

8. Pompe d'alimentation en carburant à haute pression selon la revendication 2,
dans laquelle une surface circonférentielle intérieure (8g) du boîtier de vanne (8e) est réalisée dans une forme permettant un guidage du corps élastique (8d) au niveau d'un côté circonférentiel extérieur du corps élastique (8d).

9. Pompe d'alimentation en carburant à haute pression selon la revendication 1,
dans laquelle une pluralité de trous de décharge (8e1) configurés pour décharger un fluide sont formés à travers une surface latérale du boîtier de vanne (8e), et
le boîtier de vanne (8e) est formé d'un élément prévu entre deux trous de décharge (8e1) agencés de manière adjacente jusque dans une forme permettant de restreindre un déplacement de la vanne (8b) dans la direction transversale.

10. Pompe d'alimentation en carburant à haute pression selon la revendication 1,
dans laquelle une pluralité de trous de décharge (8e1) configurés pour décharger un fluide sont formés à travers une surface latérale du boîtier de vanne (8e), et
la pluralité de trous de décharge (8e1) sont formés entre la surface de siège (8a3) et une surface du boîtier de vanne (8e) tournée à l'opposé vers la surface de siège (8a3).

11. Pompe d'alimentation en carburant à haute pression selon la revendication 2,
dans laquelle la portion de restriction (8c, 8c1) et le boîtier de vanne (8e) sont formés de manière intégrale du même élément.

12. Pompe d'alimentation en carburant à haute pression selon la revendication 11, dans laquelle le mécanisme à vanne (8) comprend, sur un côté circonférentiel intérieur du boîtier de vanne (8e), une portion de guidage (8g) configurée pour guider le corps élastique (8d) au niveau d'un côté circonférentiel extérieur du corps élastique (8d),
dans laquelle la portion de guidage (8g) et le boîtier de vanne (8e) sont formés de manière intégrale du même élément.

13. Pompe d'alimentation en carburant à haute pression selon la revendication 12,
dans laquelle une taille de la portion de restriction (8c, 8c1) dans la direction transversale est formée pour être supérieure à une taille de la portion de guidage dans la direction transversale.

14. Pompe d'alimentation en carburant à haute pression selon la revendication 1,
dans laquelle une pluralité de trous de décharge (8e1) configurés pour décharger un fluide sont formés à travers une surface latérale du boîtier de vanne (8e) dans des positions correspondant à la vanne (8b).

15. Pompe d'alimentation en carburant à haute pression selon la revendication 14, dans laquelle le mécanisme à vanne (8) comprend un corps élastique (8d) configuré pour solliciter la vanne (8b) dans une direction de fermeture,
dans laquelle le boîtier de vanne (8e) loge en outre le corps élastique (8d), et un trou de décharge (8e2) différent de la pluralité de trous de décharge (8e1) est formé sur un côté opposé à la vanne (8b) par rapport au corps élastique (8d).
